# EUROPÄISCHE PATENTSCHRIFT

(11) **EP 1 370 446 B1**
(45) Veröffentlichungstag und Bekanntmachung des Hinweises auf die Patenterteilung: **19.10.2005**
(21) Anmeldenummer: 02727229.3
(22) Anmeldetag: 16.03.2002
(51) Int. Cl.: B60R 11/02

(54) **MOBILTELEFONEINRICHTUNG MIT MEHRADRIGEN ELEKTRISCHEN VERBINDUNGSEINRICHTUNGEN**
MOBILE TELEPHONE DEVICE COMPRISING MULTIWIRE ELECTRICAL CONNECTION DEVICES
DISPOSITIF DE TELEPHONIE MOBILE A MOYENS DE CONNEXION ELECTRIQUES MULTIFILAIRES

(30) Priorität: 21.03.2001 DE 10113905
(43) Veröffentlichungstag der Anmeldung: 17.12.2003
(73) Patentinhaber: Audioton Kabelwerk GmbH Zweigniederlassung Scheinfeld, 91443 Scheinfeld (DE)
(72) Erfinder: SCHLEGEL, Thomas, 90453 Nürnberg (DE)
(74) Vertreter: Zinsinger, Norbert
(86) Internationale Anmeldenummer: PCT/DE2002/000951
(87) Internationale Veröffentlichungsnummer: WO 2002/076793

(56) Entgegenhaltungen:
- DE-A- 4 107 996
- FR-A- 2 783 639
- GB-A- 2 303 747
- US-A- 5 274 917
- US-A- 5 618 189
- US-A- 5 788 516

## Beschreibung

Die Erfindung betrifft eine Mobiltelefoneinrichtung nach dem Oberbegriff des Anspruchs 1. Eine derartige Einrichtung ist aus DE 4 107 996 bekannt.

Aus dem Gebrauchsmuster DE 299 15 180 sind Mobiltelefongeräte mit Verbindungseinrichtungen zwischen dem Mobiltelefongerät und einer externen Anschlussvorrichtung, wie Kfz-Anschluß, Datenstecker, Netzgerät u.dgl. bekannt. Durch die Verbindungseinrichtungen werden das Mobiltelefongerät mit den externen Anschlussvorrichtungen elektrisch leitend verbunden. Die beschriebene elektrische Verbindungsvorrichtung ist in zwei Bereiche unterteilt, wobei der eine Bereich aus bügelförmigen Federkontakten besteht und der andere Bereich einen koaxialen Aufbau mit bügel- oder hülsenförmigen Außenkontakten aufweist. Bei der bekannten Ausführung sind die Kontaktelemente je nach Art des übertragenen Signals spezifisch ausgebildet, d.h. abhängig davon, ob es sich um ein Antennenkoaxial- oder um einen Versorgungsspannungskontakt handelt.

Eine andere Verbindungseinrichtung ist in der DE 689 10 184 T2 beschrieben. Diese Verbindungseinrichtung besteht aus einem am Ende des Antennenkabels angebrachten Stecker und einen Führungskanal mit Kontakten, der in oder an einem Funkgerät angeordnet ist. Eine elektrisch leitender Kontakt wird durch Einschieben des Steckers in den Führungskanal erreicht. Eine Verbindung kann nicht durch einfaches Auflegen des Funkgeräts auf den Stecker aufgebaut, sondern Stecker und Führungskanal müssen ineinandergeschoben werden.

Eine weitere Verbindungseinrichtung ist in der DE 198 44 730 A1 offenbart. Sie dient zur Verbindung eines Mobilfunkgerätes mit einer externen Antenne. Der Aufbau der Verbindungseinrichtung ist koaxial und es sind keine Verbindungselemente vorgesehen, um weitere Signale, wie z.B. Versorgungsspannungen, zu übertragen.

In der DE 69513 512 T2 ist eine weitere Verbindungseinrichtung vorgeschlagen, die das Kontaktieren eines Teils eines Funkkommunikationsgerätes an/mit einer elektrischen Schaltung ermöglicht. Diese Verbindungseinrichtung zielt auf eine dauerhafte Verbindung, sie ist nicht für ein häufiges, flexibles Trennen und Verbinden ausgelegt, wie es z.B. zwischen einer Mobiltelefonhalterung und einem im Kraftfahrzeug stationär anbringbaren Grundteil erforderlich wäre.

Bei der in der EP 0 578 099 A1 offenbarten anderen Verbindungseinrichtung, wird ein lösbares Koaxial-Steckverbinderelement wird auf den Stift einer Stiftleiste aufgeschoben. Da das Steckelement sehr genau auf den Stift aufgeschoben werden muss, ist diese Art der mechanischen Verbindung für die Verbindung einer Mobiltelefonhalterung mit einem in einem Kraftfahrzeug stationär anbringbaren Grundteil nicht geeignet.

In der nicht vorveröffentlichten DE 199 45 176 A1 ist als Verbindungseinrichtung eine Anordnung von Federkontakten in einem vorbestimmten Raster beschrieben. Diese Federkontakte dienen dazu, auf einer Leiterplatte (PCB) Signale abzugreifen und sie zu einer Meßeinrichtung weiterzuführen. Eine Verwendung mit Mobiltelefonen ist nicht vorgesehen.

Andere bekannte Hochfrequenzverbindungseinrichtungen sind als sogenannte Koaxialsteckerverbindungen ausgebildet. Sie weisen als Verbindungselemente einen Stecker und eine Buchse auf. Stecker und Buchse bestehen jeweils aus einem Innenleiter und einem zur Abschirmung dienenden hülsenartigen Außenleiter. In der Verbindungsstellung greifen die Innenleiter und die Außenleiter von Stecker und Buchse axial kontaktierend ineinander. Zwischen dem Innenleiter und dem Außenleiter ist eine Dielektrikumschicht angeordnet. Diese ist als Beschichtung von mindestens einem der Außenleiter und Innenleiter von Stecker und Buchse ausgebildet. Die Koaxialverbinder mit ineinander greifenden Bauteilen sind damit relativ komplex und filigran aufgebaut, ferner verschleißanfällig.

Derartige bekannte Koaxialverbinder werden häufig für Anwendungen unter anderem auch bei Telekommunikationseinrichtungen wie in Mobiltelefoneinrichtungen, z.B. Freisprecheinrichtungen in Kraftfahrzeugen eingesetzt. Die Koaxialverbindung dient zur Übertragung der Antennensignale zwischen dem Mobiltelefon und einer zur temporären Aufnahme des Mobiltelefons ausgebildeten Halteschale, in der Praxis Cradle genannt sowie zur Übertragung dieser Signale zwischen dem Cradle und einem kraftfahrzeugfest montiertem Grundteil, mit dem das Cradle zur Halterung kuppelbar ist. Die in diesen Komponenten fest installierten Verbindungselemente der Koaxialverbinder, nämlich Buchse und Stecker, sind anfällig für Verschleiß und Verschmutzung. In der Praxis kommt es häufig vor, daß die Buchse durch Schmutzpartikel verstopft wird oder sich darin Kondenswasser sammelt. Ferner kommt es im praktischen Gebrauch mitunter zu mechanischen Beschädigungen durch Verbiegen der filigranen Bauteile dieser Steckerverbindungen. Es ergeben sich damit auch Handhabungsnachteile beim Einstecken und Herausnehmen des Mobiltelefons in bzw. aus dem Cradle sowie beim Aufsetzen und Lösen des Cradles auf dem kraftfahrzeugfesten Grundteil, denn gleichzeitig mit dem Verbinden und Lösen der mechanischen Kupplungsvorrichtungen muß jeweils die elektrische Koaxialverbindung eingestellt bzw. gelöst werden. Hinzu kommt, daß zusätzlich zur elektrischen Stromversorgung und Signalleitung noch zwischen Mobiltelefon und Cradle und zwischen dem Cradle und dem Grundteil jeweils weitere elektrische Verbindungseinrichtungen vorgesehen sind, die ebenfalls automatisch beim mechanischen Verbinden und Lösen gehandhabt werden müssen. Diese elektrischen Verbindungseinrichtungen sind anders aufgebaut und funktionieren anders als die verwendeten Koaxialverbinder, wodurch der konkrete Aufbau und die Handhabung beim Kuppeln und Lösen dieser komplexen Gesamtanordnung noch verkompliziert wird.

Der Erfindung liegt die Aufgabe zugrunde, eine Mobiltelefoneinrichtung dahingehend zu verbessern, daß die Handhabung beim Lösen und Verbinden der mechanischen und gleichzeitig elektrischen Kupplung zwischen dem Cradle und dem im Kraftfahrzeug fest montierbaren Grundteil und/oder zwischen dem Mobiltelefon und dem Cradle einfach und mit weniger Verschleiß durchführbar ist.

Die Erfindung löst diese Aufgabe mit der Mobiltelefoneinrichtung gemäß dem Anspruch 1.

Die Mobiltelefoneinrichtung sieht elektrische Verbindungseinrichtungen vor zur elektrischen Verbindung des im Kraftfahrzeug stationär anbringbaren Grundteils mit der ein Mobiltelefon temporär aufnehmenden in der Regel als Cradle ausgebildeten Halterung und/oder zur elektrischen Verbindung des Mobiltelefons und der als Cradle ausgebildeten Halterung. Die Verbindungseinrichtungen können bei im Prinzip gleichem mechanischem Aufbau als Koaxialverbinder oder als nicht koaxiale elektrische Verbindungseinrichtungen ausgebildet sein. Es handelt sich jeweils um Kontaktverbinder, die in der Verbindungsstellung mit ihren Stirnenden in Kontakt stehen.

Die beiden Verbindungselemente weisen jeweils einen Dielektrikum-Körper auf, in welchem mehrere parallele mit Abstand zueinander angeordnete separate Leiter angeordnet sind.

Die Ausführungen, die nicht als Koaxialverbinder ausgebildet sind, können zur Stromversorgung oder zur Signalübertragung zwischen den Komponenten der Mobiltelefoneinrichtung eingesetzt werden. Sie können dahingehend aufgebaut sein, daß die verschiedenen Leiter in einer oder mehreren Reihen angeordnet sind, ohne daß es darauf ankommt, daß eine symmetrische oder koaxiale Anordnung der Leiter vorliegt. Die in dem Dielektrikum verlaufenden Leiter, die in der Verbindungsstellung an ihren Stirnenden miteinander zusammenwirken, bilden mehradrige Kontaktverbinder.

Weitere Ausführungen, die als Koaxialverbinder ausgestaltet sind, weisen einen Aufbau mit Innenleiter und Außenleiter auf und werden in der Mobiltelefoneinrichtung als Koaxialverbinder zur Leitung der Antennensignale zwischen dem Mobiltelefon und dem Cradle bzw. dem Cradle und dem kraftfahrzeugfesten Grundteil eingesetzt.

Die Koaxialverbindungseinrichtung weist anstelle der herkömmlichen hülsenförmigen Abschirmung in Stecker und Buchse nun eine Außenleitereinrichtung bestehend aus mehreren separaten Außenleitern auf. Um eine gute Abschirmung zu erhalten, ist vorgesehen, daß die Außenleiter parallel zueinander und jeweils mit Abstand und parallel zum Innenleiter angeordnet sind.

Dies bedeutet, daß dieser neuartige Koaxialleiter in der Art eines mehradrigen elektrischen Verbinders aufgebaut ist ein besonders einfacher, fertigungstechnisch günstiger Aufbau ergibt sich, wenn der Innenleiter des Verbindungselements hinsichtlich seines mechanischen Aufbaus als identischer Leiter ausgebildet ist wie jeder der Außenleiter desselben Verbindungselements und wenn die Leiter in Reihen angeordnet sind, wobei jede der Reihen mindestens drei Leiter aufweist. Der zentrale Leiter ist bei diesen Ausführungen als der Innenleiter ausgebildet. Alternativ zu diesen Ausführungen, bei denen die Leiter in parallelen Reihen angeordnet sind, sind Ausführungen vorgesehen, bei denen die Außenleiter konzentrisch in Kreisanordnung um den Innenleiter angeordnet sind.

Ein wesentlicher Vorteil besteht darin, daß in der Verbindungsstellung die zugeordneten Außenleiter und die Innenleiter der Verbindungselemente axial zueinander fluchtend angeordnet sind und mit ihren einander zugewandten Enden zusammenwirken. Der Koaxialverbinder kann somit als eine in der Verbindungsstellung auf Stoß stehende Kontakteinrichtung ausgebildet sein. Vorzugsweise sind die in der Verbindungsstellung einander zugewandten Stirnenden ausschließlich in ihrem axial äußersten Bereich als Kontaktenden ausgebildet. Es kann vorgesehen sein, daß sie in der Verbindungsstellung einander in einer gemeinsamen Kontaktfläche berühren, die sich vorzugsweise im wesentlichen senkrecht zu der axialen Erstreckung der Außenleiter und Innenleiter erstrecken kann. Dies bedeutet, daß die axialen Endflächen z.B. flächig aufeinander stehen. Diese Endflächen können eben, aber auch komplementär gekrümmt ausgebildet sein. Wenn diese Endflächen ausschließlich im Endbereich der zusammenwirkenden Außenleiter und Innenleiter der Verbindungselemente ausgebildet sind, erstreckt sich die gemeinsame Kontaktfläche in der Regel senkrecht zur axialen Erstreckung der betreffenden Leiter. Ferner sind besonders vorteilhafte Ausführungen vorgesehen, bei denen in der Verbindungsstellung die Kontaktenden in einem gemeinsamen Kontaktpunkt oder in einer gemeinsamen Kontaktlinie einander berühren. Dies ist der Fall, wenn das eine Kontaktende als ebene Stirnfläche und das andere Kontaktende als ballige Kuppe oder als Spitze bzw. Kante ausgebildet ist. Vorteilhafterweise kann bei den Ausführungen jeweils auf buchsenartige Aufnahmen und komplementäre Stecker verzichtet werden Aus Zentrierungsgründen können jedoch bei bestimmten Ausführungen die Kontaktenden auch mehr oder weniger komplementär ineinander greifend ausgebildet sein, ohne daß jedoch die typische filigrane Steckerbuchsenverbindung der herkömmlichen Koaxialstecker realisiert werden muß.

Wesentliche Vorteile beim Einsatz in den Mobiltelefoneinrichtungen ergeben sich damit, daß die Verbinder jeweils als Kontaktverbinder ausgeführt sein können, die ausschließlich an den aneinander zugewandten Stirnenden, vorzugsweise im axial äußersten Bereich der Stirnenden in der Verbindungsstellung in berührendem Anschlag stehen und somit entweder die Kontaktflächen flächig aufeinander liegen oder die Kontaktflächen mit Kontaktspitzen oder Kontaktkuppen in der Verbindungsstellung in Anlage kommen, wodurch sich eine einfache Handhabung beim Verbinden und Lösen gleichzeitig mit dem mechanischen Kuppeln und Lösen von Mobiltelefon und Cradle bzw. Cradle und Grundteil ergibt und mechanische Beschädigung und Verschleiß der Verbindungselemente vermieden wird.

Konstruktiv und fertigungstechnisch besonders günstige Ausführungen als Koaxialverbinder ergeben sich, wenn in einem der Verbindungselemente die Außenleiter und der Innenleiter in einem Dielektrikum-Körper fixiert, vorzugsweise darin eingebettet, angeordnet sind und in dem anderen Verbindungselement die Außenleiter und der Innenleiter in einem Dielektrikum-Körper beweglich, vorzugsweise federnd, abgestützt gelagert sind. Diese federnd abgestützten Leiter können als sogenannte Federstifte ausgebildet sein, indem sie jeweils als mehrteilige Körper ausgebildet sind. Sie können eine in dem Dielektrikum-Körper fixierte Aufnahmehülse, eine in der Aufnahmehülse angeordnete Feder und einen in der Aufnahmehülse geführten auf der Feder abgestützten Stift aufweisen. Besonders hohe Funktionalität wird erreicht, wenn die in dem Dielektrikum-Körper fixierten stiftförmigen Leiter, die sich durch den Dielektrikum-Körper erstrecken, im Bereich ihres Kontaktendes in der auf der Kontaktseite ausgebildeten Stirnfläche des Dielektrikum-Körpers bündig angeordnet sind und die im anderen Verbindungselement angeordneten federnd abgestützten Kontaktstifte, die sich durch den Dielektrikum-Körper ihres Verbindungselements erstrecken, mit ihrem Kontaktende über die an der Kontaktseite dieses Verbindungselements ausgebildete Stirnfläche als federnde Kontaktköpfe auskragend angeordnet sind und in der Verbindungsstellung in Kontaktlage mit dem zugeordneten Kontaktstift entgegen der Wirkung ihrer Feder in Richtung des Dielektrikum-Körpers hineinverschoben sind. Damit werden Fertigungstoleranzen der mit den Verbindungselementen versehenen Bauteile in der Verbindungsstellung kompensiert und jeweils der elektrische Kontakt in der Verbindungsstellung sichergestellt.

Um eine Zentrierung in der Verbindungsstellung zu gewährleisten, können unterschiedliche Maßnahmen vorgesehen sein, z.B. kann eine Zentriervorrichtung, die auch gleichzeitig oder alternativ als mechanische Kupplungsvorrichtung ausgebildet sein kann, mit den Verbindungselementen oder einem damit verbundenen Teil verbunden sein. Es kann z.B. zwischen den Verbindungselementen ein Zentrierstift vorgesehen sein, der in der Verbindungsstellung in eine komplementäre Ausnehmung eingreift. Ein solcher Zentrierstift kann als separater Zentrierstift im Bereich oder außerhalb der die elektrischen Leiter tragenden Verbindungselemente ausgebildet sein. Alternativ oder zusätzlich kann auch einer oder mehrere der Leiter, d.h. Außenleiter oder Innenleiter die Funktion eines Zentrierstifts übernehmen. Dies kann dadurch erfolgen, daß der oder die betreffenden Leiter in eine bzw. mehrere komplementäre Ausnehmungen in der Verbindungsstellung eingreifen. Diese Ausnehmungen können im Bereich der Kontaktenden, z.B. durch entsprechend komplementäre z.B. ballige Kontaktflächen realisiert sein. Alternativ oder zusätzlich können auch sämtliche Kontaktenden der Leiter der beiden Verbindungselemente in einer komplementären, z.B. gekrümmten gemeinsamen Fläche liegen, um eine Zentrierung in der Verbindungsstellung zu erreichen.

Im nachfolgenden werden Ausführungsbeispiele der Erfindung in Verbindung mit Zeichnungen näher erläutert. Dabei zeigen:
- Fig. 1: eine schematische Explosionsdarstellung eines Ausführungsbeispiels einer HF-Verbindungseinrichtung für den Einsatz in einer erfindungsgemäßen Mobiltelefoneinrichtung in Seitenansicht, wobei die Verbindungselemente auf Leiterplatten montiert sind;
- Fig. 2: eine Fig. 1 entsprechende Darstellung der Verbindungseinrichtung, jedoch in Verbindungsstellung der Verbindungselemente,
- Fig. 3: eine perspektivische vergrößerte Darstellung der Verbindungselemente der Verbindungseinrichtung in den Fig. 1 und 2,
- Fig. 4: eine Fig. 3 entsprechende Darstellung der Verbindungselemente in Fig. 3, jedoch mit Blickwinkel in Fig. 3 von unten;
- Fig. 5: eine transparente perspektivische Prinzipdarstellung der Verbindungselemente entsprechend Fig. 1 bis 4;
- Fig. 6: eine Detail-Schnittansicht eines der federnden Kontaktstifte der Verbindungseinrichtung in den Fig. 1 bis 5;
- Fig. 7: eine perspektivische Explosionsdarstellung einer als Cradle ausgebildeten Halteschale mit Mobiltelefon einer Mobiltelefoneinrichtung mit Freisprecheinrichtung zum Einsatz in einem Kraftfahrzeug, mit einer HF-Verbindungseinrichtung der Fig. 1 bis 6 und einer ähnlich aufgebauten zweiten elektrischen Verbindungseinrichtung, die jedoch nicht aus Koaxialverbindung ausgebildet ist;
- Fig. 8: eine perspektivische Darstellung der Halteschale in Fig. 7, jedoch ohne Mobiltelefon, aber mit fahrzeugfest montierbarer Konsole, mit HF-Verbindungseinrichtung und einer zweiten ähnlich aufgebauten elektrischen Verbindungseinrichtung, die jedoch nicht als Koaxialverbindungseinrichtung ausgebildet ist;
- Fig. 9: eine schematische Explosionsdarstellung eines Ausführungsbeispiels einer Freisprecheinrichtung mit den diversen elektrischen Kontaktverbindungseinrichtungen.

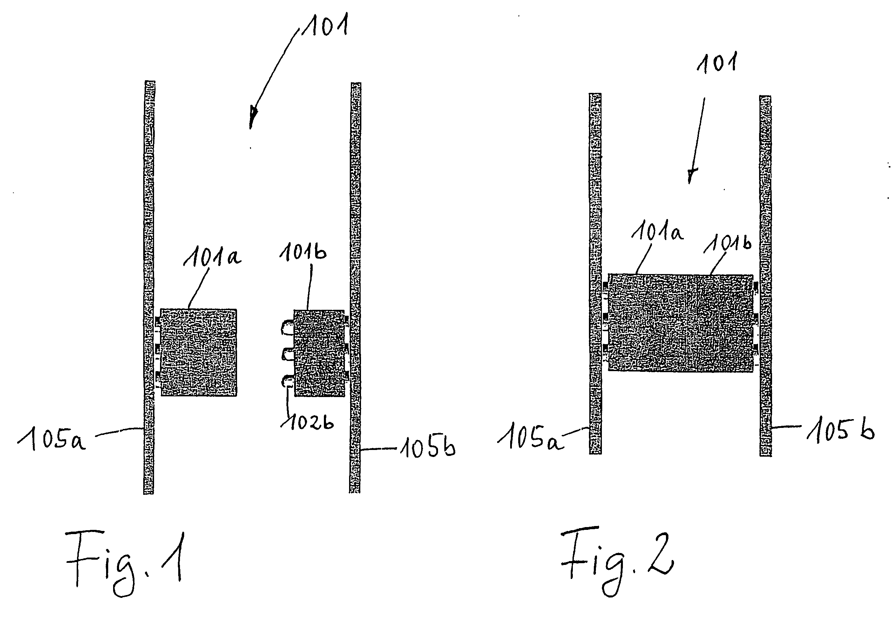

Zunächst wird auf die Fig. 1 bis 6 Bezug genommen und die dort dargestellte Verbindungseinrichtung 101 hinsichtlich Aufbau und Funktion beschrieben. Sie ist in der dargestellten Ausführung als Koaxialverbinder in einer Hochfrequenzleitung, z.B. Antennenleitung einsetzbar. Sie besteht aus einem ersten Verbindungselement 101a und einem zweiten Verbindungselement 101b, die in der Verbindungsstellung mit ihren einander zugewandten Kontaktseiten stirnseitig in berührendem Kontakt stehen (siehe Fig. 2).

Die Verbindungselemente 101a, 101b sind in der in den Fig. 1 und 2 dargestellten eingebauten Stellung auf Leiterplatten 105a bzw. 105b montiert. Die Leiterplatten 105a, 105b können in den Fig. 1 und 2 nicht dargestellten Geräteteilen montiert sein, die zur Ausbildung der HF-Verbindung zusammengeführt, vorzugsweise mechanisch gekuppelt werden.

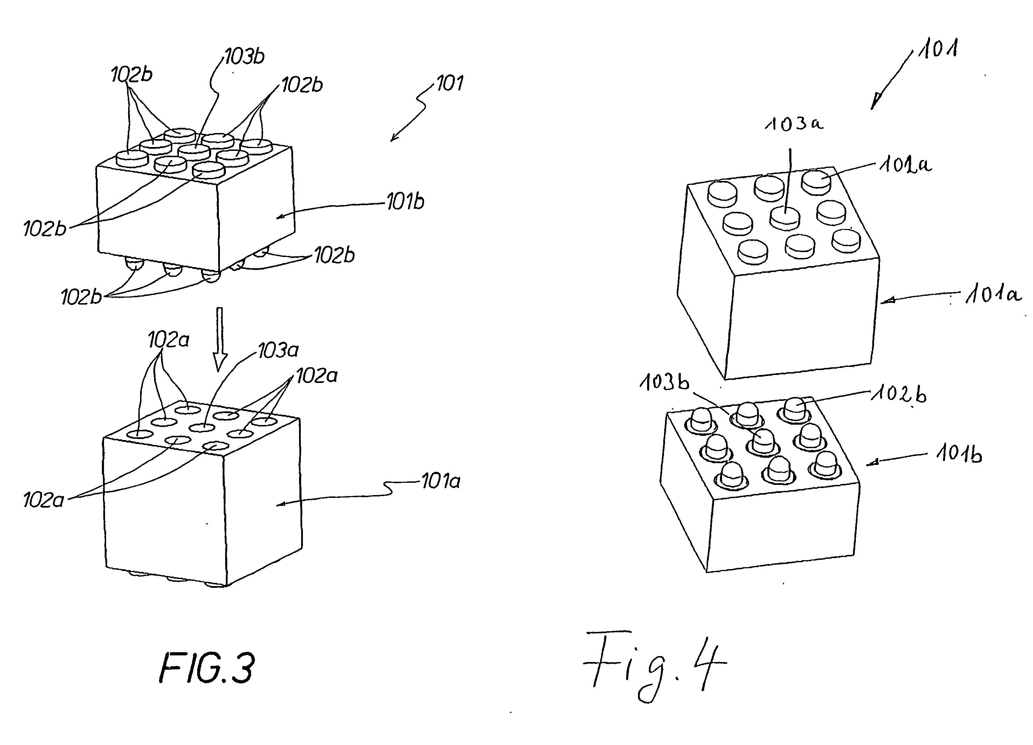

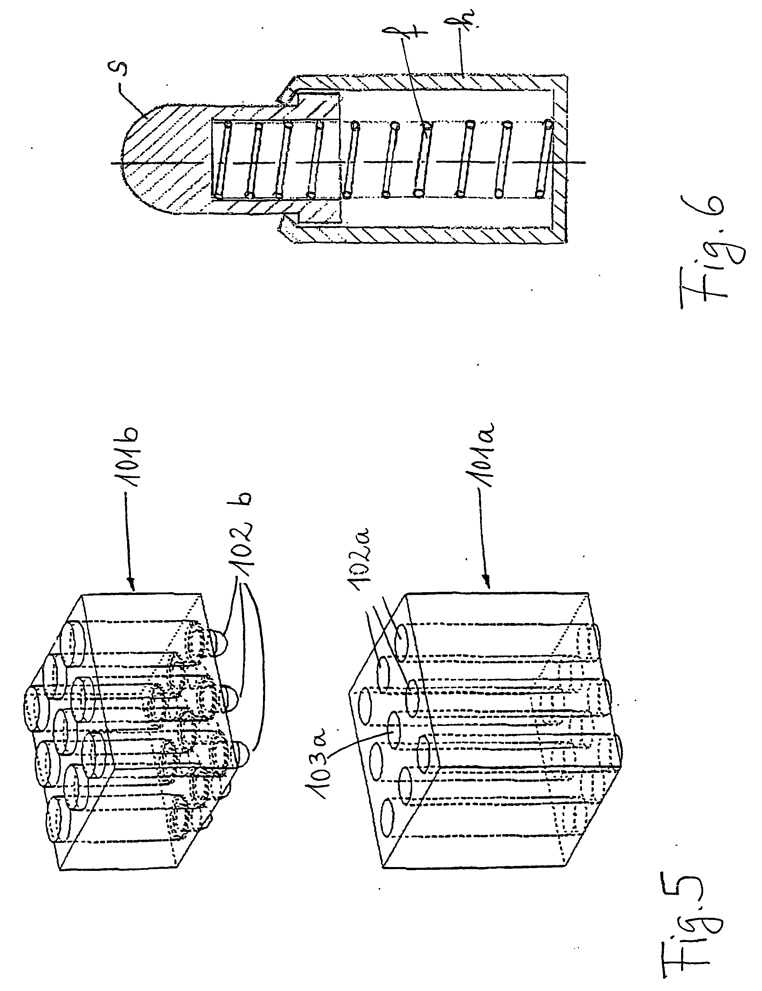

Die beiden Verbindungselemente 101a und 101b sind als Koaxialverbindungselemente ausgebildet. Jedes dieser beiden Koaxialverbindungselemente 101a, 101b weist einen Dielektrikum-Körper auf, der jeweils als quaderförmiger Block mit quadratischem Querschnitt ausgebildet ist (siehe Fig. 3a und 5). In dem Dielektrikum-Körper eingebettet sind bei der dargestellten Ausführung in jedem Verbindungselement 101a, 101b jeweils neun Leiter 102a, 103a; 102b, 103b. Diese neun Leiter sind in dem dargestellten Fall in drei parallelen Reihen mit jeweils drei Leitern pro Reihe angeordnet. Die äußeren Leiter 102a, 102b sind zueinander in einer im Querschnitt quadratischen Konfiguration angeordnet. Durch das Zentrum dieser Quadratkonfiguration verläuft der zentrale Leiter 103a, 103b. Das erste Verbindungselement 101a weist somit acht solche äußeren Leiter 102a und einen zentralen Leiter 103a auf. Das zweite Verbindungselement 101b weist in entsprechender Weise acht äußere Leiter 102b und einen zentralen Leiter 103b auf. Benachbarte Leiter einer Reihe weisen jeweils gleichen Abstand auf. Die Leiter erstrecken sich jeweils axial parallel zueinander und in axialer Richtung durch den Dielektrikum-Körper senkrecht zu seiner quadratischen Querschnittsfläche. In Verbindungsstellung der beiden Verbindungselemente 101a, 101b fluchten die neun Leiter 102a, 103a des ersten Verbindungselements mit den neun Leitern 102b, 103b des zweiten Verbindungselements 101b. Der zentrale Leiter 103a, 103b bildet jeweils den Innenleiter der Koaxialverbindung. Die äußeren Leiter 102a, 102b bilden die mit Masse verbundene Abschirmung in dieser Koaxialverbindung.

In dem ersten Verbindungselement 101a sind die Leiter 102a, 103a als in dem Dielektrikum-Körper fixiert eingebettete Stifte ausgebildet. Es handelt sich um Metallstifte, z.B. aus vergoldetem Kupfer. Sie sind jeweils identisch ausgebildet. Ihre axialen Enden liegen im Bereich der Stirnenden des Dielektrikum-Körpers. Sie weisen Kontaktenden auf, die in der Verbindungsstellung der HF-Verbindungseinrichtung dem zweiten Verbindungselement 101b zugewandt sind und mit den Kontaktenden der Leiter 102b, 103b dieses zweiten Verbindungselements 101b in berührender Anlage stehen. Diese Kontaktenden der Stifte weisen eine ebene Kontaktfläche auf und sind bündig mit der Stirnfläche des Dielektrikum-Körpers. Die anderen Enden dieser Leiterstifte 102a, 103a sind als Anschlußenden ausgebildet, die über die an dieser Seite des Dielektrikumkörpers angeordnete Stirnfläche hinausragen und in der in den Fig. 1 und 2 dargestellten Installationsstellung mit einer Leiterplatte 105a z.B. über Lötstellen verbunden sind. Sie können dabei mit einer auf der Leiterplatte verlegten oder dort angeschlossenen Koaxialleitung verbunden sein.

Die Leiter 102b, 103b des zweiten Verbindungselements 101b sind als federnd gelagerte Stifte ausgebildet. Sie sind jeweils untereinander identisch ausgebildet. Wie im Detail in Fig. 6 gezeigt, besteht der federnde Stift jeweils aus einer Aufnahmehülse h, einer in der Aufnahmehülse angeordneten Schraubendruckfeder f und einem in die Aufnahmehülse h eintauchend axial verschiebbar geführten Stift s. Dieser Stift s weist an seiner Innenseite eine Lagerausnehmung auf, in die die am Boden der Aufnahmehülse h abgestützte Feder f mit ihrem oberen Ende eingreift, um sich dort abzustützen. Der Stift s weist einen bundförmigen Rand auf, der an der Innenseite des oberen nach innen gebogenen Rands der Hülse h in der in Fig. 6 dargestellten Stellung in Anschlag steht. Die Aufnahmehülse h ist in dem Dielektrikum-Körper fixiert eingebettet. Der Boden der Aufnahmehülse h steht dabei über die Stirnseite des Dielektrikum-Körpers über und bildet das Anschlußende, das in der Installationsstellung in den Fig. 1 und 2 mit einer Leiterplatte 105b über eine Lötstelle verbunden ist. Das freie Ende des in der Aufnahmehülse h federnd gelagerten Stiftes s ragt in der Nichtverbindungsstellung über die Stirnseite des Dielektrikum-Körpers etwas hinaus. Dieses freie Ende bildet das Kontaktende, welches in der Verbindungsstellung dieser HF-Verbindungseinrichtung 101 an dem zugeordneten Kontaktende der zugeordneten Leiter 102a, 103a des Verbindungselements 101a in berührender Anlage steht. Der federnd gelagerte Stift ist dabei entgegen der Wirkung der Feder etwas in den Dielektrikum-Körper des Verbindungselements hineinverschoben.

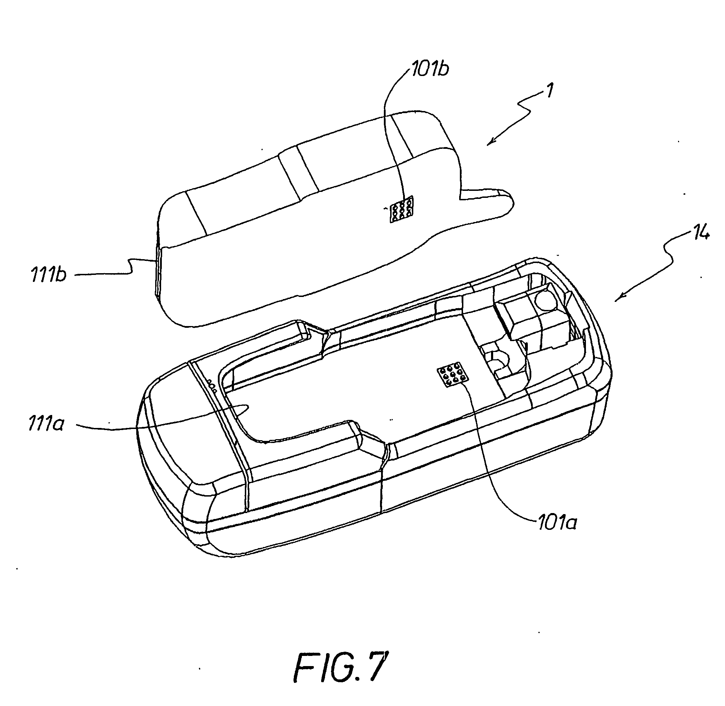

Die HF-Verbindungseinrichtung 101 bildet bei dem Ausführungsbeispiel in Fig. 7 die HF-Verbindung zwischen einem Mobiltelefon 1 und einem als Halteschale für das Mobiltelefon 1 ausgebildeten Cradles 14. Das erste Verbindungselement 101a mit den fixierten Stiften und der insgesamt ebenen Kontaktfläche ist in dem der Unterseite des Mobiltelefons 1 zugewandten Boden des Cradles 14 fixiert. Die Leiterplatte 105a, auf dem das Verbindungselement 101a angeordnet ist (siehe Fig. 1 und 2), ist in dem Cradle 14 fixiert. Das zweite Verbindungselement 101b mit den Federstiften ist in der Unterseite des Mobiltelefons 1 fixiert. Die Leiterplatte 105b (siehe Fig. 1 und 2) ist integrierter Bestandteil des Mobiltelefons 1. Die Anordnung der Verbindungselemente 101a, 101b ist jeweils so ausgebildet, daß die Stirnfläche des Dielektrikum-Körpers mit dem Boden der Aufnahme des Cradles 14 bzw. mit der Unterseite des Mobiltelefons 1 bündig ist. Die Kontaktenden der in dem Verbindungselement 101a festen Leiterstifte sind mit der Stirnfläche des Dielektrikum-Körpers bündig, so daß also die gesamte Stirn- und Kontaktfläche des Verbindungselements 101a mit dem Boden der Aufnahme des Cradles 14 bündig ist und somit im Bereich des Anschlusses dieser Koaxialverbindung keine Vertiefungen oder Vorsprünge vorhanden sind. Die Kontaktenden der federnd gelagerten Stifte des in der Unterseite des Mobiltelefons 1 gelagerten Verbindungselements 101b stehen in der Nichtverbindungsstellung über die Stirnfläche ihres Dielektrikum-Körpers über. Da die Stirnfläche des Dielektrikum-Körpers mit der Unterseite des Mobiltelefons 1 bündig ist, bilden die Kontaktenden der neun federnden Kontaktstifte überstehende federnde Köpfe, während der übrige Bereich dieses Verbindungselements 101b mit der Unterseite des Mobiltelefons bündig ist.

In der in Fig. 7 nicht dargestellten in das Cradle 14 eingesteckten Stellung des Mobiltelefons 1 ist das Mobiltelefon 1 formschlüssig in der bereichsweise hinterschnittenen komplementären Aufnahme des Cradles 14 eingerastet. Dabei liegt die Unterseite des Mobiltelefons 1 auf dem Boden der Aufnahme auf und zwar insbesondere im Bereich, in dem die Verbindungselemente 101a, 101b angeordnet sind, so daß in der in das Cradle eingesteckten Stellung des Mobiltelefons die Kontaktköpfe der Leiterstifte 102b, 103b auf den Kontaktflächen der Leiterstifte 102a, 103a aufliegen. Die federnd gelagerten Kontaktstifte (siehe Fig. 6) sind dabei entgegen ihrer Lagerfeder f mehr oder weniger weit in ihre jeweilige Aufnahmehülse h hineingeschoben. In der Verbindungsstellung, die schematisch in Fig. 2 dargestellt ist, ist die HF-Verbindung zwischen dem Mobiltelefon 1 und dem Cradle 14 hergestellt. An der innerhalb des Cradle 14 angeordneten Leiterplatte 105a ist eine nicht dargestellte Antennenleitung angeschlossen, die mit einer Außenbordantenne des Kraftfahrzeugs, d.h. eine außerhalb des Fahrzeuginneren angeordneten Außenantenne verbunden ist.

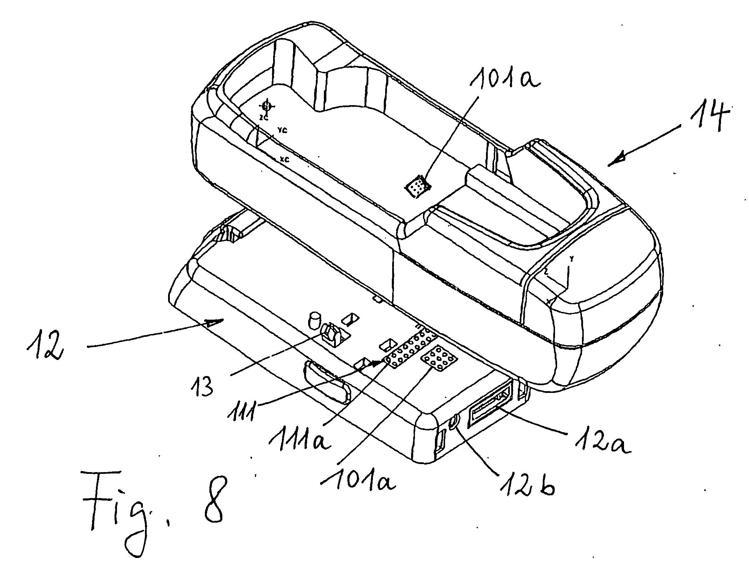

Wie in Fig. 8 dargestellt ist, ist ein ortsfest, insbesondere in einem Kraftfahrzeug montierbares Grundteil 12 vorgesehen, auf dem das Cradle 14 über eine mechanisch Rastverbindung montierbar ist. Zwischen dem Grundteil 12 und dem Cradle 14 ist ebenfalls eine HF-Verbindungseinrichtung 101 vorgesehen. Dies ist ebenfalls identisch ausgebildet wie die in Verbindung mit den Fig. 1 und 2 beschriebene HF-Verbindung 101. Hierfür ist in der Oberseite des Grundteils 12 ein Verbindungselement 101a und in der Unterseite des Cradles 14 ein Verbindungselement 101b angeordnet. Die Verbindungselemente 101a, 101b, sind auch hier so eingebaut, daß die Stirnfläche mit den Einbauflächen an der Oberseite des Grundteils 12 bzw. an der Unterseite des Cradles 14 bündig ist. Auch in diesem Falle sind die Leiterplatten 105a und 105b in dem Grundteil 12 bzw. dem Cradle 16 fixiert. In der mechanischen Verrastungsstellung zwischen Cradle 14 und Grundteil 12 wird der elektrische Kontakt der Verbindungselemente 101a, 101b und damit die HF-Verbindung erhalten.

Die mechanische Kupplung von Cradle 14 und Grundteil 12 erfolgt über eine spezielle Rasteinrichtung. Diese kann, wie in Fig. 8 dargestellt, derart ausgebildet sein, daß an dem Grundteil 12 angeordnete Rastnasen 13, die an der Oberseite des Grundteils 12 auskragend angeordnet sind, in an der Unterseite des Cradles 14 angeordnete Rastausnehmungen automatisch verrastend eingreifen, wenn das Cradle 14 auf das Grundteil 12 aufgesetzt wird.

An der Stirnseite des Grundteils 12 ist eine koaxiale Anschlußbuchse 12b ausgebildet zum Anschluß eines Antennenkabels zur Verbindung mit einer externen Antenne z.B. Außenbordantenne des Fahrzeugs. Diese Anschlußbuchse 12b ist als herkömmliche Koaxialbuchse ausgebildet. Sie ist über die Leiterplatte 105a mit dem Verbindungselement 101a der HF-Verbindung 101 verbunden.

Wie in Fig. 8 zu erkennen ist, ist in dem Grundteil 12 mit Abstand zu der HF-Verbindungseinrichtung 101 noch eine weitere elektrische Kontaktverbindungseinrichtung 111 ausgebildet. Sie ist im Unterschied zu der Verbindungseinrichtung 101 nicht als Koaxialverbindungseinrichtung ausgebildet, sondern als mehradrige elektrische Stromversorgungs- und Signalleitungsverbindungseinrichtung ausgeführt und zwar als sogenannte Niederfrequenzverbindung, kurz NF-Verbindung. Sie besteht aus einem Verbindungselement 111a, welches in der Oberseite des Grundteils 12 angeordnet ist, und einem in Fig. 8 nicht dargestellten Verbindungselement 111b, welches in der Unterseite des Cradles 14 angeordnet ist. Diese beiden Verbindungselemente 111a, 111b entsprechen in ihrem konstruktiven Aufbau insoweit dem Verbindungselement 101a bzw. 101b, als sie jeweils einen entsprechenden Dielektrikum-Körper aufweisen, in welchem im Falle des Verbindungselements 111a Kontaktstifte fixiert eingebettet und im Falle des Verbindungselements 111b federnde Kontaktstifte in die Dielektrikum-Körper gelagert sind. Im Unterschied zu der HF-Verbindungseinrichtung 101 sind bei dem elektrischen Verbinder 111 die Dielektrikum-Körper jeweils im Querschnitt länglich rechteckige Quader. Die Kontaktstifte des Verbindungselements 111a und die federnden Kontaktstifte des Verbindungselements 111b sind jeweils in nur zwei Reihen mit je acht festen Kontaktstiften bzw. acht federnden Kontaktstiften angeordnet. Diese Stifte bilden jeweils die Leiteradem des elektrischen Anschlusses. Sie sind im Unterschied zur HF-Verbindung 101 nicht als Innenleiter und Außenleiter zur Ausbildung einer Abschirmung ausgebildet, sondern lediglich als separate Adern dieser mehradrigen elektrischen Verbindung. Die Verbindungseinrichtung 111 bildet also eine nicht koaxiale elektrische Verbindung für die Stromversorgung und elektrische Signalleitung. Die Verbindungselemente 111a und 111b sind in entsprechender Weise, wie für die HF-Verbindungseinrichtung in den Fig. 7 und 8 gezeigt, an Leiterplatten 105a bzw. 105 b angeschlossen, die in dem Grundteil 12 bzw. dem Cradle 14 fest angeordnet sind. In Abwandlung gegenüber Fig. 8 können die NF-Verbindungseinrichtung 111 und die HF-Koaxialverbindungseinrichtung 101 in einer gemeinsamen Baueinheit ausgebildet sein, d.h. die Verbindungselemente 111a und 101a und die Verbindungselemente 111b und 101b können jeweils als Baueinheit in einem jeweils kombinierten Verbindungselement a bzw. b ausgebildet sein, vorzugsweise jeweils mit einem gemeinsamen Dielektrikumkörper a bzw. b, z.B. als länglicher Quaderkörper ausgebildet.

Wie Fig. 8 zeigt das Grundteil 12 an seiner äußeren Stirnseite benachbart zur Koaxialbuchse 12b eine herkömmliche Anschlußbuchse 12a auf. Diese Buchse 12a ist über die Leiterplatte 105a mit dem Verbindungselement 111a elektrisch verbunden.

Wie in Fig. 7 zu erkennen ist, ist ebenfalls zwischen dem Mobiltelefon 1 und dem Cradle 14 eine nicht koaxiale elektrische Kontaktverbindungseinrichtung 111 vorgesehen. Sie kann gleich aufgebaut sein wie die in Verbindung mit Fig. 8 beschriebene Kontaktverbindung 111. Sie dient in Fig. 7 zum elektrischen Anschluß des Mobiltelefons 1 am Cradle 14. Das Verbindungselement 111b ist im stirnseitigen Fußende, des Mobiltelefons 1 und das Verbindungselement 111a in dem zugeordneten Stirnbereich der Aufnahme 14a des Cradles angeordnet.

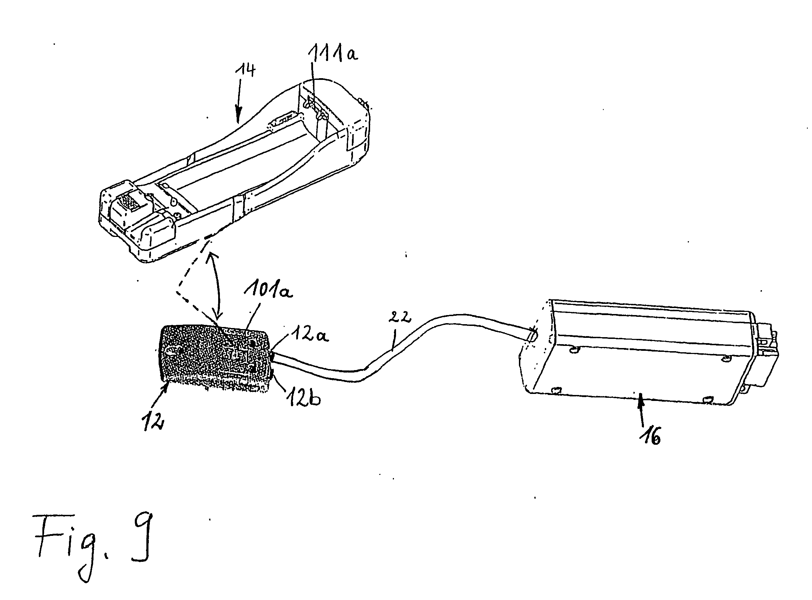

Im Folgenden wird unter Bezugnahme auf Fig. 9 der Grundaufbau der Mobiltelefoneinrichtung mit Freisprecheinrichtung beschrieben, in der als ein bevorzugter Anwendungsfall die oben beschriebenen Kontaktverbindungen 101, 111 zum Einsatz vorgesehen sind. Die dargestellte Mobiltelefoneinrichtung mit Freisprecheinrichtung ist so ausgebildet, daß auf besonders einfache Weise der Austausch des Mobiltelefons gegen ein Mobiltelefon anderen Typs durchführbar ist. Die Mobiltelefoneinrichtung umfaßt eine Mobiltelefonhaltevorrichtung mit einem stationär im Fahrzeug, z.B. am Armaturenbrett, an der Mittelkonsole oder in der Armlehne montierbaren Grundteil 12 und einer als sogenanntes Cradle ausgebildeten Halteschale 14, die zur Aufnahme eines Mobiltelefons 1 (siehe Fig. 2) und zwar für den eingesetzten Mobiltelefontyp spezifisch ausgebildet ist. Die Mobiltelefonhaltevorrichtung mit Cradle 14 und Grundteil 12 mit den Kontaktverbindem 101, 111 ist oben bereits in Verbindung mit den Fig. 7 und 8 beschrieben.

Wie in Fig. 9 dargestellt, ist das Grundteil 12 über eine Busverbindung 22 mit einer Interfacebox 16 verbunden. Die interfacebox 16 enthält das sogenannte Interfacemodul, das die zentrale Steuereinheit der gesamten Mobiltelefoneinrichtung inklusive Freisprech- und Ladeelektronik darstellt. Die interfacebox 16 ist über eine nicht dargestellte elektrische Verbindung an das Fahrzeugbordnetz angeschlossen unter anderem zur Steuerung des Lautsprechers und des Mikrofons der Freisprecheinrichtung und eines Spracherkenners. Das Fahrzeugbordnetz kann einen Fahrzeugbus aufweisen, an dem die Freisprecheinrichtung angeschlossen werden kann, um über den Bus mit anderen Komponenten zu kommunizieren. Die Interfacebox 16 ist im Fahrzeug fest montiert, z.B. hinter oder unter dem Armaturenbrett oder im Kofferraum.

In Fig. 9 nicht dargestellt sind der Lautsprecher und das Mikrofon der Freisprecheinrichtung. Diese können separat im Fahrzeug angeordnet sein. Das Mikrofon ist vorzugsweise im oberen Bereich des Fahrgastraums in der Fahrzeugdecke oder im Bereich der Sonnenblende angeordnet. Der Lautsprecher der Freisprecheinrichtung kann ebenfalls im Fahrgastraum separat angeordnet sein; es kann aber auch vorgesehen sein, daß der Lautsprecher des Autoradios als Lautsprecher der Freisprecheinrichtung schaltbar ist und es kann auch ein Mikrofon der Autoradioanlage als Freisprechmikrofon verwendet werden.

Die Einrichtung ist so geschaltet, daß bei dem in Cradle 14 eingesteckten Mobiltelefon der Freisprechmodus aktiviert ist, d.h. der Freisprechlautsprecher und das Freisprechmikrofon eingeschaltet sind. Bei Entnahme des Mobiltelefons aus dem Cradle 14 oder bei Abnahme des Cradles vom Grundteil 12 erfolgt automatisch die Umschaltung von Freisprechmode in Private Mode, bei dem das Freisprechmikrofon und der Freisprechlautsprecher ausgeschaltet sind und das Telefonieren im Private Mode über Mikrofon und Lautsprecher des Mobiltelefons erfolgt.

Wie bereits erwähnt, handelt es sich bei der Mobiltelefoneinrichtung in Fig. 1 um eine universell für verschiedene Mobiltelefontypen einsetzbare Freisprecheinrichtung. Hierfür sind die im Fahrzeug fest installierten Bauteile, d.h. die Interfacebox 16, und das Grundteil 12 unabhängig vom Mobiltelefontyp ausgebildet und verbleiben unverändert bei einem Austausch des Mobiltelefons im Kraftfahrzeug installiert. Lediglich das Cradle 14, welches vorzugsweise mobiltelefonspezifische Software aufweist, ist für das Mobiltelefon typspezifisch ausgebildet. Das Cradle 14 bildet eine Anschlußeinheit,'die spezifisch zum Mobiltelefon ausgebildet ist und daher beim Austausch des Mobiltelefons jeweils mitausgetauscht wird.

## Patentansprüche

1. Mobiltelefoneinrichtung für den Betrieb von Mobiltelefonen in Kraftfahrzeugen, z.B. Personenkraftwagen, Bus- und Lastkraftwagen und anderen Nutzfahrzeugen, vorzugsweise Freisprecheinrichtungen, mit einer im Kraftfahrzeug installierbaren Montageeinrichtung mit einem im Kraftfahrzeug stationär anbringbarern Grundteil, das vorzugsweise am Armaturenbrett oder an der Mittelkonsole oder an der Armlehne oder in oder am Handschuhfach oder in oder an einer Tür, vorzugsweise Innenseite einer Fahrzeugtür, anbringbar ist, und einer ein Mobiltelefon temporär aufnehmenden Halterung, vorzugsweise Halteschale, wobei zwischen dem Mobiltelefon und der das Mobiltelefon temporär aufnehmenden Halterung und/oder zwischen der das Mobiltelefon aufnehmenden Halterung und dem im Kraftfahrzeug stationär anbringbaren Grundteil zur elektrischen Verbindung eine elektrische Verbindungseinrichtung vorgesehen ist,
**dadurch gekennzeichnet,**
**daß** die elektrische Verbindungseinrichtung (101,111) ein erstes Verbindungselement (101a, 111a) und ein zweites Verbindungselement (101b, 111b) aufweist, wobei jedes der Verbindungselemente einen Dielektrikum-Körper aufweist, in welchem mehrere parallel und mit Abstand zueinander angeordnete stiftförmige separate Leiter (102a, 103a, 102b, 103b) angeordnet sind und einen stiftförmigen Innenleiter und mehrere eine koaxiale Abschirmung bildende stiftförmige Außenleiter ausbilden, wobei Dielektrikum des Dielektrikum-Körpers zwischen innenielter und Außenleiter
geschaltet ist,
wobei das erste Verbindungselement (101a, 111a) und das zweite Verbindungselement (101b, 111b) in einer Verbindungsstellung unter Ausbildung einer elektrischen Verbindung zusammenwirken, indem die stiftförmigen Leiter (102a, 103a) des ersten Verbindungselements (101a, 111a) mit den stiftförmigen Leitern (102b, 103b) des zweiten Verbindungselements (101b, 111b) miteinander fluchtend an ihren aneinander zugewandten Stirnenden in berührender Anlage stehen, und wobei in mindestens einem der Verbindungselemente (101b) mindestens die stiftförmigen Außenleiter (102b) und/oder der stiftförmige Innenleiter (103b) in dem Dielektrikum-Körper federnd beweglich gelagert sind.

2. Mobiltelefoneinrichtung nach Anspruch 1,
**dadurch gekennzeichnet,**
**dass** die Verbindungseinrichtung Teil einer Hochfrequenzleitung ist.

3. Mobiltelefoneinrichtung nach Anspruch 1 oder 2,
**dadurch gekennzeichnet,**
**dass** das erste Verbindungselement und das zweite Verbindungselement in einer Verbindungsstellung unter Ausbildung einer koaxialen elektrischen Verbindung miteinander zusammenwirken, indem der Innenleiter des ersten Verbindungselements mit dem Innenleiter des zweiten Verbindungselements und die Außenleitereinrichtung des ersten Verbindungselements mit der Außenleitereinrichtung des zweiten Verbindungselements elektrisch verbunden sind.

4. Moblltelefoneinrichtung nach einem der vorhergehenden Ansprüche,
**dadurch gekennzeichnet,**
**dass** die Außenleitereinrichtung (102a) des ersten Verbindungselements (101a) und die Außenleitereinrichtung (102b) des zweiten Verbindungselements (101b) jeweils mehrere separate Außenleiter (102a, 102b) aufweisen.

5. Mobiltelefoneinrichtung nach Anspruch 4,
**dadurch gekennzeichnet,**
**dass** die separaten Außenleiter (102a, 102b) mit gegenseitigem Abstand und parallel zueinander und dabei jeweils mit Abstand zum Innenleiter (103a, 103b) und parallel zu diesem angeordnet sind.

6. Mobiltelefoneinrichtung nach Anspruch 5.
**dadurch gekennzeichnet,**
**dass** jeder Außenleiter (1 02a) des ersten Verbindungselements (101a) jeweils einem Außenleiter (102b) des zweiten Verbindungselements (101b) zugeordnet ist und die einander zugeordneten Außenleiter (102a,102b) in der Verbindungsstellung jeweils zueinander fluchtend angeordnet sind und mit ihren zugewandten Enden zusammenwirken.

7. Mobiltelefoneinrichtung nach einem der vorhergehenden Ansprüche,
**dadurch gekennzeichnet,**
**daß** die Leiter (102a, 103a; 102b, 103b) In mehreren parallelen Reihen angeordnet sind, wobei vorzugsweise vorgesehen ist, daß jede Reihe mindestens drei Leiter aufweist und daß mindestens zwei, vorzugsweise drei parallele Reihen ausgebildet sind.

8. Mobiltelefoneinrichtung nach einem der vorhergehenden Ansprüche,
**dadurch gekennzeichnet,**
**daß** die Verbindungseinrichtung (101) als HF-Verbindungseinrichtung ausgebildet ist, indem in dem ersten Verbindungselement (101b) und in dem zweiten Verbindungselement (101b) jeweils mindestens einer der Leiter als Innenleiter (103a, 103b) ausgebildet ist und mehrere um diesen Innenleiter (103a, 103b) herum angeordnete Leiter (102a, 102b) als Außenleiter ausgebildet sind, die eine koaxiale Abschirmung bilden, wobei in der Verbindungsstellung die Innenleiter (103a, 103b) und die Außenielter (102a, 102b) der beiden Verbindungselemente (101a, 101b) jeweils zueinander fluchtend angeordnet sind und mit ihren einander zugewandten Enden berührend aufeinander stehen.

9. Mobiltelefoneinrichtung nach einem der vorhergehenden Ansprüche,
**dadurch gekennzeichnet,**
**daß** die in der Verbindungsstellung einander zugewandten Stirnenden der innenleiter (103a, 103b) und der Außenleiter (102a, 102b) vorzugsweise jeweils ausschließlich der axial äußerste Bereich der Stirnenden, als Kontaktenden ausgebildet sind, die in der Verbindungsstellung in einander berührendem Anschlag stehen.

10. Mobiltelefoneinrichtung nach einem der vorhergehenden Ansprüche,
**dadurch gekennzeichnet,**
**daß** die einander berührenden Kontaktenden so ausgebildet sind,
a) daß sie in der Verbindungsstellung einander, vorzugsweise ausschließlich, in einer gemeinsamen Kohtaktfläche berühren, die im wesentlichen senkrecht oder winkelig zu der axialen Erstreckung der Außenleiter (102a, 103a) und Innenleiter (103a, 103b) sich erstreckt und/oder
b) daß sie in der Verbindungsstellung einander, vorzugsweise ausschließlich, in einem gemeinsamen Kontaktpunkt oder in einer gemeinsamen Kontaktlinie berühren, wobei auch in diesem Falle mindestens eines der beiden berührenden Kontaktenden eine Kontaktfläche aufweist, die im wesentlichen senkrecht oder winkelig zur axialen Erstreckung der Außenleiter (102, 102b) und der Innenleiter (103a, 103b) sich erstreckt.

11. Mobiltelefoneinrichtung nach einem der vorhergehenden Ansprüche,
**dadurch gekennzeichnet,**
**daß** in mindestens einem der Verbindungselemente (101a, 101b) mehr als zwei Außenleiter (102a, 102b) um den Innenleiter (103a, 103b) herum angeordnet sind,
wobei benachbarte Außenleiter (102a, 102b) jeweils mit zueinander gleichem Abstand angeordnet sind und/oder die den Innenleiter (103a, 103b) umgebenden Außenleiter (102a, 102b) mit jeweils zumindest ungefähr gleichem Abstand zum Innenleiter (103a, 103b) angeordnet sind.

12. Mobiltelefoneinrichtung nach einem der vorhergehenden Ansprüche,
**dadurch gekennzeichnet,**
**daß** in mindestens einem der Verbindungselemente (101a, 101b) die Außenlelter (102a, 102b) durch Kanten, vorzugsweise Eckpunkte eines in der Querschnittsebene des Verbindungselements fiktivon Rechtecks, vorzugsweise Quadrats oder eines anderen regelmäßigen Vielecks oder eines Kreises verlaufend angeordnet sind, wobei der Innenleiter (103a, 103b) in einer zentralen Achse dieser Konfiguration verlaufend angeordnet ist.

13. Mobiltelefoneinrichtung nach einem der vorhergehenden Ansprüche,
**dadurch gekennzeichnet,**
**daß** die Außenleiter (102a) des ersten Verbindungselements (101a) jeweils identisch ausgebildet sind.

14. Mobiltelefoneinrichtung nach einem der vorhergehenden Ansprüche,
**dadurch gekennzeichnet,**
**daß** die Außenleiter (102b) des zweiten Verbindungselements (101b) jeweils identisch ausgebildet sind.

15. Mobiltelefoneinrichtung nach einem der vorhergehenden Ansprüche,
**dadurch gekennzeichnet,**
**daß** die Außenleiter (102a) des ersten Verbindungselements (101a) unterschiedlich zu den Außenleitern (102b) des zweiten Verbindungselements (101b) ausgebildet sind.

16. Mobiltelefoneinrichtung nach einem der vorhergehenden Ansprüche,
**dadurch gekennzeichnet,**
**daß** der Innenleiter (103a, 103b) hinsichtlich eines mechanischen Aufbaus als identischer Leiter wie mindestens einer der Außenleiter (102a, 102b) desselben Verbindungselements (101a, 101b), vorzugsweise wie jeder der Außenleiter (102a, 102b) desselben Verbindungselements (101a, 101b) ausgebildet ist.

17. Mobiltelefoneinrichtung nach Anspruch 16,
**dadurch gekennzeichnet,**
**daß** der Innenleiter (103b, 103a) des Verbindungselements hinsichtlich eines mechanischen Aufbaus als identischer Leiter ausgebildet ist wie jeder der Außenleiter (102a, 102b) desselben Verbindungselements (101a, 101b) und daß die Leiter (102a, 103a; 102b, 103b) in Reihen angeordnet sind, wobei jede der Reihen mindestens drei Leiter (102a, 103a; 102b, 103b) aufweist.

18. Mobiltelefoneinrichtung nach einem der vorangehenden Ansprüche,
**dadurch gekennzeichnet,**
**daß** in mindestens einem der Verbindungselemente (101a) mindestens einer der Außenleiter (102a) und/oder der Innenleiter (103a) in einem Dielektrikum-Körper fixiert, vorzugsweise darin eingebettet angeordnet ist bzw. sind.

19. Mobiltelefoneinrichtung nach einem der vorangehenden Ansprüche,
**dadurch gekennzeichnet,**
**daß** der Außenleiter (102b) und/oder der Innenleiter (103b) mindestens einer der beiden Verbindungselemente einen mehrteiligen Körper aufweist, vorzugsweise mit einer in dem Dielektrium-Körper fixierten Aufnahmehülse (h), einer in der Aufnahmehülse (h) angeordneten Feder (f) und einem in der Aufnahmehülse (h) geführten, auf der Feder (f) abgestützten Stift (s),

20. Mobiltelefoneinrichtung nach einem der vorhergehenden Ansprüche
**dadurch gekennzeichnet,**
**daß** mindestens einer der Außenleiter (102b) und/oder der innenleiter (103b) des einen Verbindungselements (101b) jeweils als ein in einem Dielektrikum-Körper federnd abgestützter Körper ausgebildet ist und die Außenleiter (102a) und der innenleiter (103a) des anderen Verbindungselements (101a) als in einem Dielektrikum-Körper des zweiten Verbindungselements fixiert eingebettete Körper ausgebildet sind.

21. Mobiltelefoneinrichtung nach einem der vorhergehenden Ansprüche,
**dadurch gekennzeichnet,**
**daß** mindestens einer der Außenleiter (102a, 102b) und/oder der Innenleiter (103a, 103b) mindestens eines der beiden Verbindungselemente (101a, 101b) sich durch den Dielektrikum-Körper erstreckt und das Kontaktende In einer Stirnfläche des Dielektrikum-Körpers bündig angeordnet oder über die Stirnfläche des Dielektrikum-Körpers auskragend angeordnet ist.

22. Mobiltelefoneinrichtung nach Anspruch 21,
**dadurch gekennzeichnet,**
**daß** die Stirnfläche des Dielektrikum-Körpers eben oder gekrümmt, vorzugsweise nach außen hin oder nach innen hin gekrümmt angeordnet ist, wobei vorzugsweise vorgesehen ist, daß die Stirnfläche des Dielektrikum- Körpers zumindest im wesentlichen senkrecht zur axialen Erstreckung des Innenleiters (103a, 103b) und /oder des Außenleiters (102a, 102b) angeordnet ist.

23. Mobiltelefoneinrichtung nach einem der vorangehenden Ansprüche,
**dadurch gekennzeichnet,**
**daß** zur gegenseitigen Zentrierung und/oder mechanischen Kupplung der Verbindungselemente (101a, 101b) in der Verbindungsstellung eine Zentriervorrichtung bzw, eine mechanische Kupplungsvorrichtung vorgesehen ist, die mit den Verbindungselementen oder einem damit verbundenen Teil verbunden ist.

## Claims

1. Mobile telephone device for operation of mobile telephones in motor vehicles, for example passenger vehicles, buses and goods vehicles and other commercial vehicles, preferably hands-free devices, having a mounting device which can be installed in the motor vehicle and has a basic part which can be fitted in a stationary manner in the motor vehicle and can preferably be fitted to the dashboard or to the centre console or to the armrest, or in or to the glove compartment or in or to a door, preferably the inside of a vehicle door, and having a holder, preferably a holding shell, which temporarily holds a mobile telephone, with an electrical connecting device for electrical connection being provided between the mobile telephone and the holder which is temporarily holding the mobile telephone and/or between the holder which is holding the mobile telephone and the basic part, which can be fitted in a stationary manner in the motor vehicle,
**characterized**
**in that** the electrical connecting device (101, 111) has a first connecting element (101a, 111a) and a second connecting element (101b, 111b), with each of the connecting elements having a dielectric body in which two or more separate conductors (102a, 103a, 102b, 103b), which are arranged parallel and at a distance from one another and are in the form of pins, are arranged, and form an inner conductor, which is in the form of a pin, and two or more outer conductors, which form a coaxial screen and are in the form of pins, with dielectric of the dielectric body being connected between the inner conductor and the outer conductor, with the first connecting element (101a, 111a) and the second connecting element (101b, 111b) interacting in a connected position forming an electrical connection in that the conductors (102a, 103a) which are in the form of pins on the first connecting element (101a, 111a) make a touching contact with the conductors (102b, 103b) which are in the form of pins on the second connecting element (101b, 111b) with their mutually facing ends aligned with one another, and with at least the outer conductors (102b) which are in the form of pins and/or the inner conductor (103b) which is in the form of a pin being mounted such that they or it can move in a sprung manner in the dielectric body in at least one of the connecting elements (101b).

2. Mobile telephone device according to Claim 1,
**characterized in that**
the connecting device is part of a radio-frequency line.

3. Mobile telephone device according to Claim 1 or 2,
**characterized in that**
the first connecting element and the second connecting element interact with one another in a connected position forming a coaxial electrical connection, **in that** the inner conductor of the first connecting element is electrically connected to the inner conductor of the second connecting element, and the outer conductor device of the first connecting element is electrically connected to the outer conductor device of the second connecting element.

4. Mobile telephone device according to one of the preceding claims
**characterized in that**
the outer conductor device (102a) of the first connecting element (101a) and the outer conductor device (102b) of the second connecting element (101b) each have two or more separate outer conductors (102a, 102b).

5. Mobile telephone device according to Claim 4,
**characterized in that**
the separate outer conductors (102a, 102b) are arranged at a distance from one another and parallel to one another and at the same time are each arranged at a distance from the inner conductor (103a, 103b) and parallel to it.

6. Mobile telephone device according to Claim 5,
**characterized in that**
each outer conductor (102a) of the first connecting element (101a) is associated with in each case one outer conductor (102b) in the second connecting element (101b), and the mutually associated outer conductors (102a, 102b) are in each case arranged such that they are aligned with one another in the connected position, with their facing ends interacting.

7. Mobile telephone device according to one of the preceding claims,
**characterized in that**
the conductors (102a, 103a; 102b, 103b) are arranged in two or more parallel rows, with each row preferably having at least three conductors and with at least two and preferably three parallel rows being formed.

8. Mobile telephone device according to one of the preceding claims,
**characterized in that**
the connecting device (101) is in the form of an RF connecting device **in that** at least one of the conductors in the first connecting element (101b) and in the second connecting element (101b) is in each case in the form of an inner conductor (103a, 103b), and two or more conductors (102a, 102b) which are arranged around this inner conductor (103a, 103b) are in the form of outer conductors which form a coaxial screen, with the inner conductors (103a, 103b) and the outer conductors (102a, 102b) of the two connecting elements (101a, 101b) each being arranged such that they are aligned with one another in the connected position, with their facing ends making a touching contact with one another.

9. Mobile telephone device according to one of the preceding claims,
**characterized in that**
those ends of the inner conductors (103a, 103b) and of the outer conductors (102a, 102b) which face one another in the connected position, and preferably in each case exclusively the axially outermost area of the ends, are in the form of contact ends which make a touching contact with one another in the connected position.

10. Mobile telephone device according to one of the preceding claims,
**characterized in that**
the mutually touching contact ends are designed such that
a) they touch one another, preferably exclusively, on a common contact surface in the connected position, which common contact surface extends essentially at right angles to or at an angle to the axial extent of the outer conductors (102a, 103a) and of the inner conductors (103a, 103b), and/or
b) they touch one another, preferably exclusively, at a common contact point or on a common contact line in the connected position, with at least one of the two touching contact ends in this case also having a contact surface which extends essentially at right angles to or at an angle to the axial extent of the outer conductors (102a, 102b) and of the inner conductors (103a, 103b).

11. Mobile telephone device according to one of the preceding claims,
**characterized in that**
more than two outer conductors (102a, 102b) are arranged around the inner conductor (103a, 103b) in at least one of the connecting elements (101a, 101b),
with adjacent outer conductors (102a, 102b) each being arranged at the same distance from one another and/or the outer conductors (102a, 102b) which surround the inner conductor (103a, 103b) each being arranged at at least approximately the same distance from the inner conductor (103a, 103b).

12. Mobile telephone device according to one of the preceding claims,
**characterized in that**,
in at least one of the connecting elements (101a, 101b), the outer conductors (102a, 102b) are arranged such that they run through edges, preferably corner points of a fictional rectangle in the cross-sectional plane of the connecting element, preferably of a square or of some other regular polygon or of a circle, with the inner conductor (103a, 103b) being arranged such that it runs on a central axis of this configuration.

13. Mobile telephone device according to one of the preceding claims,
**characterized in that**
the outer conductors (102a) of the first connecting element (101a) are each identical.

14. Mobile telephone device according to one of the preceding claims,
**characterized in that**
the outer conductors (102b) of the second connecting element (101b) are each identical.

15. Mobile telephone device according to one of the preceding claims,
**characterized in that**
the outer conductors (102a) of the first connecting element (101a) are different to the outer conductors (102b) of the second connecting element (101b).

16. Mobile telephone device according to one of the preceding claims,
**characterized in that**,
in terms of its mechanical design, the inner conductor (103a, 103b) is an identical conductor to at least one of the outer conductors (102a, 102b) of the same connecting element (101a, 101b), preferably to each of the outer conductors (102a, 102b) of the same connecting element (101a, 101b).

17. Mobile telephone device according to Claim 16,
**characterized in that**,
in terms of its mechanical design, the inner conductor (103b, 103a) of the connecting element is an identical conductor to each of the outer conductors (102a, 102b) of the same connecting element (101a, 101b), and **in that** the conductors (102a, 103a; 102b, 103b) are arranged in rows, with each of the rows having at least three conductors (102a, 103a; 102b, 103b).

18. Mobile telephone device according to one of the preceding claims,
**characterized in that**,
in at least one of the connecting elements (101a), at least one of the outer conductors (102a) and/or the inner conductor (103a) are/is fixed in a diametric body and preferably are/is arranged embedded in the dielectric body.

19. Mobile telephone device according to one of the preceding claims,
**characterized in that**
the outer conductor (102b) and/or the inner conductor (103b) of at least one of the two connecting elements has a multiple part body, preferably with a holding sleeve (h) which is fixed in the dielectric body, with a spring (f) which is arranged in the holding sleeve (h) and with a pin (s) which is guided in the holding sleeve (h) and is supported on the spring (f).

20. Mobile telephone device according to one of the preceding claims,
**characterized in that**
at least one of the outer conductors (102b) and/or the inner conductor (103b) of one connecting element (101b) are/is in each case in the form of a body which is supported in a sprung manner in a dielectric body, and the outer conductors (102a) and the inner conductor (103a) of the other connecting element (101a) are in the form of a body which is embedded in a fixed manner in a dielectric body in the second connecting element.

21. Mobile telephone device according to one of the preceding claims,
**characterized in that**
at least one of the outer conductors (102a, 102b) and/or the inner conductors (103a, 103b) of at least one of the two connecting elements (101a, 101b) extend/extends through the dielectric body, and the contact end is arranged flush with an end surface of the dielectric body or is arranged such that it projects beyond the end surface of the dielectric body.

22. Mobile telephone device according to Claim 21,
**characterized in that**
the end surface of the dielectric body is planar or curved, and is preferably arranged such that it curves outwards or inwards, preferably with the end surface of the dielectric body being arranged at least essentially at right angles to the axial extent of the inner conductor (103a, 103b) and/or of the outer conductor (102a, 102b).

23. Mobile telephone device according to one of the preceding claims,
**characterized in that**
a centering apparatus or a mechanical coupling apparatus, which is connected to the connecting elements or to a part that is connected to them, is provided for mutual centring and/or mechanical coupling of the connecting elements (101a, 101b) in the connected position.

## Revendications

1. Dispositif de téléphonie mobile pour faire fonctionner des téléphones mobiles dans des véhicules automobiles, par exemple des voitures individuelles, des bus et des camions et d'autres véhicules utilitaires, de préférence des dispositifs pour parler les mains libres, avec un dispositif de montage qui peut être installé dans le véhicule, avec une partie de base qui peut se monter de manière fixe dans le véhicule, de préférence sur le tableau de bord ou sur la console centrale ou sur l'accoudoir ou dans la boîte à gants ou dans ou sur une porte, de préférence la face interne d'une porte du véhicule, et un support recevant de manière temporaire un téléphone mobile, de préférence une coque support, dans lequel un dispositif de liaison électrique est prévu pour la liaison électrique entre le téléphone mobile et le support recevant temporairement le téléphone mobile et/ou entre le support recevant le téléphone mobile et la partie de base pouvant se monter de manière fixe dans le véhicule, **caractérisé en ce que** le dispositif de liaison électrique (101, 111) présente un premier élément de connexion (101a,111a) et un deuxième élément de connexion (101b, 111b), chacun des éléments de connexion présentant un élément diélectrique dans lequel plusieurs conducteurs séparés en forme de broche disposés en parallèle et espacés les uns des autres (102a, 103a, 102b, 103b) sont disposés et forment un conducteur intérieur en forme de broche et plusieurs conducteurs extérieurs en forme de broche formant un blindage coaxial, le diélectrique de l'élément diélectrique étant placé entre le conducteur intérieur et le conducteur extérieur, dans lequel le premier élément de connexion (101a, 111a) et le deuxième élément de connexion (101b, 111b) coopère dans une position de connexion en formant une liaison électrique par le fait que les conducteurs en forme de broche (102a, 103a) du premier élément de connexion (101a, 111a) sont disposés alignés les uns avec les autres et en contact au niveau de leurs faces d'extrémité opposées avec les conducteurs en forme de broche (102b, 103b) du deuxième élément de connexion (101b, 111b) et, dans l'un au moins des éléments de connexion (101b), au moins les conducteurs extérieurs en forme de broche (102b) et/ou le conducteur intérieur en forme de broche (103b) sont supportés de manière mobile élastiquement dans l'élément diélectrique.

2. Dispositif de téléphonie mobile selon la revendication 1, **caractérisé en ce que** le dispositif de connexion fait partie d'une liaison à haute fréquence.

3. Dispositif de téléphonie mobile selon la revendication 1 ou la revendication 2, **caractérisé en ce que** le premier élément de connexion et le deuxième élément de connexion coopèrent l'un avec l'autre dans une position de connexion en formant une liaison électrique coaxiale par le fait que le conducteur intérieur du premier élément de connexion est relié électriquement au conducteur intérieur du deuxième élément de connexion et que le dispositif de conducteur extérieur du premier élément de connexion est relié électriquement au dispositif de conducteur extérieur du deuxième élément de connexion.

4. Dispositif de téléphonie mobile selon l'une des revendications précédentes, **caractérisé en ce que** le dispositif de conducteur extérieur (102a) du premier élément de connexion (101a) et le dispositif de conducteur extérieur (102b) du deuxième élément de connexion (101b) présentent chacun plusieurs conducteurs extérieurs séparés (102a, 102b).

5. Dispositif de téléphonie mobile selon la revendication 4, **caractérisé en ce que** les conducteurs extérieurs séparés (102a, 102b) sont disposés à une certaine distance entre eux et parallèlement les uns aux autres et ce respectivement à une certaine distance du conducteur intérieur (103a, 103b) et parallèlement à celui-ci.

6. Dispositif de téléphonie mobile selon la revendication 5, **caractérisé en ce que** chaque conducteur extérieur (102a) du premier élément de connexion (101a) est affecté respectivement à un conducteur extérieur (102b) du deuxième élément de connexion (101b) et **en ce que** les conducteurs extérieurs affectés deux à deux (102a, 102b) sont disposés alignés les uns avec les autres dans la position de connexion et coopèrent par leurs extrémités se faisant face.

7. Dispositif de téléphonie mobile selon l'une des revendications précédentes, **caractérisé en ce que** les conducteurs (102a, 103a ; 102b, 103b) sont disposés en plusieurs rangées parallèles, où il est de préférence prévu que chaque rangée présente au moins trois conducteurs et qu'il soit formé au moins deux, de préférence trois rangées parallèles.

8. Dispositif de téléphonie mobile selon l'une des revendications précédentes, **caractérisé en ce que** le dispositif de connexion (101) est réalisé sous la forme d'un dispositif de connexion HF par le fait que, dans le premier élément de connexion (101b) et dans le deuxième élément de connexion (101b), l'un au moins des conducteurs est réalisé à chaque fois sous forme de conducteur intérieur (103a, 103b) et plusieurs conducteurs (102a, 102b) disposés autour de ce conducteur intérieur (103a, 103b) sont réalisés sous forme de conducteurs extérieurs formant un blindage coaxial, les conducteurs intérieurs (103a, 103b) et les conducteurs extérieurs (102a, 102b) des deux éléments de connexion (101a, 101b) étant disposés alignés les uns avec les autres dans la position de connexion et en contact par leurs extrémités se faisant face deux à deux.

9. Dispositif de téléphonie mobile selon l'une des revendications précédentes, **caractérisé en ce que** les faces d'extrémité des conducteurs intérieurs (103a, 103b) et des conducteurs extérieurs (102a, 102b) qui se font face deux à deux dans la position de connexion sont de préférence exclusivement la zone axialement la plus à l'extérieur des faces d'extrémité, réalisées sous forme d'extrémités de contact qui sont en butée de contact l'une contre l'autre dans la position de connexion.

10. Dispositif de téléphonie mobile selon l'une des revendications précédentes, **caractérisé en ce que** les extrémités de contact se touchant les unes les autres sont réalisées de telle façon que
a) dans la position de connexion, elles se touchent deux à deux, de préférence exclusivement, dans une surface de contact commune qui s'étend sensiblement perpendiculairement ou obliquement par rapport à une extension axiale des conducteurs extérieurs (102a, 103a) et des conducteurs intérieurs (103a, 103b) et/ou
b) dans la position de connexion, elles se touchent deux à deux, de préférence exclusivement, en un point de contact commun ou sur une ligne de contact commune, l'une au moins des deux extrémités de contact qui se touchent présentant dans ce cas également une surface de contact qui s'étend sensiblement perpendiculairement ou obliquement par rapport à une extension axiale des conducteurs extérieurs (102, 102b) et des conducteurs intérieurs (103a, 103b).

11. Dispositif de téléphonie mobile selon l'une des revendications précédentes, **caractérisé en ce que**, dans l'un au moins des éléments de connexion (101a, 101b), plus de deux conducteurs extérieurs (102a, 102b) sont disposés autour des conducteurs intérieurs (103a, 103b), des conducteurs extérieurs (102a, 102b) voisins étant disposés chacun à la même distance l'un de l'autre et/ou les conducteurs extérieurs (102a, 102b) qui entourent le conducteur intérieur (103a, 103b) étant disposés à une distance au moins à peu près égale du conducteur intérieur (1 03a, 103b).

12. Dispositif de téléphonie mobile selon l'une des revendications précédentes, **caractérisé en ce que**, dans l'un au moins des éléments de connexion (101a, 101b), les conducteurs extérieurs (102a, 102b) sont agencés sur les côtés, de préférence dans les angles d'un quadrilatère fictif, de préférence un carré ou un autre polygone régulier, ou dans un cercle s'étendant dans le plan en coupe de l'élément de connexion, le conducteur intérieur (103a, 103b) étant disposé le long d'un axe central de cette configuration.

13. Dispositif de téléphonie mobile selon l'une des revendications précédentes, **caractérisé en ce que** les conducteurs extérieurs (102a) du premier élément de connexion (101a) sont chacun de structure identique.

14. Dispositif de téléphonie mobile selon l'une des revendications précédentes, **caractérisé en ce que** les conducteurs extérieurs (102b) du deuxième élément de connexion (101b) sont chacun de structure identique.

15. Dispositif de téléphonie mobile selon l'une des revendications précédentes, **caractérisé en ce que** les conducteurs extérieurs (102a) du premier élément de connexion (101a) sont de structure différente de celle des conducteurs extérieurs (102b) du deuxième élément de connexion (101b).

16. Dispositif de téléphonie mobile selon l'une des revendications précédentes, **caractérisé en ce que** le conducteur intérieur (103a, 103b), du point de vue de sa structure mécanique, est réalisé sous la forme d'un conducteur identique à l'un au moins des conducteurs extérieurs (102a, 102b) du même élément de connexion (101a, 101b), de préférence identique à chacun des conducteurs extérieurs (102a, 102b) du même élément de connexion (101a, 101b).

17. Dispositif de téléphonie mobile selon la revendication 16, **caractérisé en ce que** le conducteur intérieur (103b, 103a) de l'élément de connexion, du point de vue de sa structure mécanique, est réalisé sous la forme d'un conducteur identique à l'un au moins des conducteurs extérieurs (102a, 102b) du même élément de connexion (101a, 101b) et **en ce que** les conducteurs (102a, 103a ; 102b, 103b) sont disposés en rangées, chacune des rangées présentant au moins trois conducteurs (102a, 103a ; 102b, 103b).

18. Dispositif de téléphonie mobile selon l'une des revendications précédentes, **caractérisé en ce que**, dans l'un au moins des éléments de connexion (101a), l'un au moins des conducteurs extérieurs (102a) et/ou des conducteurs intérieurs (103a) se fixe(nt) dans un élément diélectrique, de préférence est (sont) noyé(s) dedans.

19. Dispositif de téléphonie mobile selon l'une des revendications précédentes, **caractérisé en ce que** le conducteur extérieur (102b) et/ou le conducteur intérieur (103b) de l'un au moins des deux éléments de connexion présente un corps en plusieurs parties, de préférence avec une douille réceptacle (h) fixée dans l'élément diélectrique, un ressort (f) disposé dans la douille réceptacle (h) et une broche (s) guidée dans la douille réceptacle (h) et s'appuyant sur le ressort (f).

20. Dispositif de téléphonie mobile selon l'une des revendications précédentes, **caractérisé en ce que** l'un au moins des conducteurs extérieurs (102b) et/ou des conducteurs intérieurs (103b) de l'un des éléments de connexion (101b) est réalisé respectivement sous la forme d'un élément supporté élastiquement dans un élément diélectrique et **en ce que** les conducteurs extérieurs (102a) et le conducteur intérieur (103a) de l'autre élément de connexion (101a) sont réalisés sous la forme d'un élément noyé de manière fixe dans un élément diélectrique du deuxième élément de connexion.

21. Dispositif de téléphonie mobile selon l'une des revendications précédentes, **caractérisé en ce que** l'un au moins des conducteurs extérieurs (102a, 102b) et/ou des conducteurs intérieurs (103a, 103b) de l'un au moins des deux éléments de connexion (101a, 101b) s'étend à travers l'élément diélectrique et **en ce que** l'extrémité de contact est disposée affleurante dans une face frontale de l'élément diélectrique ou débordant de la frontale de l'élément diélectrique.

22. Dispositif de téléphonie mobile selon la revendication 21, **caractérisé en ce que** la face frontale de l'élément diélectrique est disposée à plat ou incurvée, de préférence incurvée vers l'extérieur ou vers l'intérieur, où il est de préférence prévu que la face frontale de l'élément diélectrique soit disposée au moins sensiblement perpendiculairement à l'extension axiale du conducteur intérieur (103a, 103b) et/ou du conducteur extérieur (102a, 102b).

23. Dispositif de téléphonie mobile selon l'une des revendications précédentes, **caractérisé en ce que**, pour le centrage deux à deux et/ou l'accouplement mécanique des éléments de connexion (101a, 101b) dans la position de connexion, il est prévu un dispositif de centrage ou un dispositif d'accouplement mécanique qui est relié aux éléments de connexion ou à une pièce reliée à ces derniers.
